# EUROPEAN PATENT APPLICATION

(11) **EP 4 336 174 A1**
(43) Date of publication of application: **13.03.2024**
(21) Application number: 23196266.3
(22) Date of filing: 08.09.2023
(51) Int. Cl.: G01N 21/88, G01N 21/90, G06T 7/00

(54) **PARTICLE INSPECTION FOR LIQUID CONTAINERS**

(30) Priority: 09.09.2022 US 202263405125 P
(71) Applicant: ATS Automation Tooling Systems Inc., Cambridge, Ontario N3H 4R7 (CA)
(72) Inventor: WESTCOTT, Andrew, Cambridge, N3H 4R7 (CA); HOGAN, Roger, Cambridge, N3H 4R7 (CA); ASHRAFIZADEH, Amirali, Cambridge, N3H 4R7 (CA); KLEINIKKINK, Stan, Cambridge, N3H 4R7 (CA)
(74) Representative: Noble, Nicholas

(57) **Abstract**

An inspection system capable of identifying particles within a liquid container such as a vial or syringe. The inspection system captures images of a container after it has stopped spinning while it is moving in a linear path through the field of view of an imager. A plurality of images are captured of the container at different positions within the field of view. The images are registered to each other and combined in order to identify particles that have moved between images, which are considered particles.

## Description

### RELATED APPLICATIONS

The current application claims priority US Provisional application 63/405,125 filed September 9, 2022 and entitled "Particle Inspection For Liquid Containers," the entire contents of which are incorporated herein by reference for all purposes.

### TECHNICAL FIELD

The current disclosure relates to detection of particles in liquid containers such as vials or syringes and in particular to a high-speed imaging techniques.

### BACKGROUND

Liquid containers such as vials and syringes are used in many applications including in life science fields. Often, the containers are sterile and need to be substantially free from particles after being filled and sealed. For example, medicines, vaccines, etc. that are liquids may be provided in vials or syringes and need to be free from particles.

The manufacturing/assembly process of the containers may provide the sterilized containers for filling and sealing in a high-speed, high-throughput automated system. Existing techniques exist for detecting particles within a container, however, the techniques can require moving an imaging system, or at least a field of view of the imaging system, in sync with the container as it travels through the manufacturing/assembly process, or at least the particle imaging portion thereof. While such techniques may detect particles, they increase the complexity of the manufacturing/assembly line. Another option is to stop the vial in front of a camera, however such a technique greatly slows down the throughput of the inspection system.

An additional, alternative and/or improved process for detecting particles within a liquid container is desired.

### SUMMARY

In accordance with the present disclosure there is provided a particle inspection method for detecting particles within a liquid, the method comprising: rotating a container being inspected for a time sufficient to cause the liquid within the container to rotate; stopping rotation of the container; while the liquid remains rotating within the container, moving the container through a field of view of a stationary imaging system; capturing a plurality of images from the stationary imaging system as the container moves past the imaging system; registering the plurality of images to each other; combining the registered plurality of images; detecting one or more particles in the combined registered plurality of images; and failing the particle inspection for the container when one or more particles are detected in the combined registered plurality of images.

In a further embodiment of the method, the plurality of images each capture an image of the container at a different location within a field of view of the imaging system.

In a further embodiment of the method, the plurality of images each capture an image of a plurality of containers, including the container, at different locations within a field of view of the imaging system.

In a further embodiment of the method, the container moves through the field of view of the stationary imaging system in a linear path.

In a further embodiment of the method, the imaging system comprises a telecentric lens.

In a further embodiment of the method, the container moves through the field of view of the stationary imaging system in a linear path.

In a further embodiment of the method, the container moves through the field of view in a fixed orientation relative to the imaging system.

In a further embodiment of the method, registering the plurality of images to each other is based on the container within each image.

In a further embodiment of the method, registering the plurality of images to each other comprises: identifying in each of the plurality of images a region of interest (ROI) based on the container; identifying common features within the ROIs in each of the plurality of images; and registering each of the images to each other based on positions of common features within the ROls.

In a further embodiment of the method, the method further comprises cropping each of the plurality of images based on the ROI within the registered images.

In a further embodiment of the method, combining the registered plurality of images comprises subtracting the images pixel-by-pixel, or adding the images pixel-by-pixel.

In a further embodiment of the method, detecting one or more particles comprises detecting particle features based on one or more of: feature intensity levels in the images; feature shape; and feature size.

In a further embodiment of the method, the method further comprises: capturing one or more additional images of a masked region for further image processing; determining if there is at least one additional particle in the one or more additional images; and failing the container inspection when there are at least one additional particle.

In a further embodiment of the method, the method further comprises: determining if the particle feature is within a masked region; and when the particle feature is within the masked region, capturing the additional particle features.

In a further embodiment of the method, the container is held at a first position when rotating the container, and the method further comprises: adjusting a holding position of the container; rotating the container; stopping rotation of the container; while the liquid remains rotating within the container, moving the container along a second linear path through a second stationary imaging system; capturing a second plurality of images from the second stationary imaging system as the container moves past the second imaging system; registering the second plurality of images to each other; combining the registered second plurality of images; detecting one or more second particles in the combined registered second plurality of images; and failing the particle inspection for the container when one or more second particles are detected.

In a further embodiment of the method, the method further comprises: rotating the container; capturing a further plurality of images as the container moves while spinning; registering the further plurality of images to each other; combining the registered further plurality of images; detecting one or more further particles located on an inside surface of the container in the combined registered further plurality of images; and failing the particle inspection for the container when one or more further particles are detected.

In a further embodiment of the method, the container comprises one or more of vials and syringes.

In a further embodiment of the method, at least one of registering the plurality of images to each other and detecting the one or more particles uses at least one machine learning (ML) algorithm.

In a further embodiment of the method, the at least one ML algorithm comprises at least one of: support vector machines; linear regression; logistic regression; naive Bayes; linear discriminant analysis; decision trees; k-nearest neighbor algorithms; neural networks; similarity learning; polynomials with ridge estimators; and polynomials with linear estimators.

In accordance with the present disclosure there is further provided a particle inspection system for detecting particles within a liquid, the system comprising: a container movement assembly for rotating a container and moving the container through an inspection line; an imaging system in a fixed position along the inspection line; and a processing device capable of performing a method according to any one of claims 1 to 19.

In a further embodiment of the system, the imaging system comprises a telecentric lens.

In a further embodiment of the system, the container movement assembly comprises a rotary dial based assembly or a track based assembly, with a rotation mechanism arranged in each container holder.

In a further embodiment of the system, the system further comprises a light source for illuminating the container.

In a further embodiment of the system, the light source is larger than a field of view of the imaging system.

In a further embodiment of the system, the light source is a back light or front light.

In a further embodiment of the system, the imaging system comprises light control film to control light distribution.

### BRIEF DESCRIPTION OF THE DRAWINGS

In the accompanying drawings, which illustrate one or more example embodiments:
FIG. 1 depicts a particle inspection system;
FIG. 2 depicts a schematic of the image processing for particle detection;
FIG. 3 depicts illustrative images captured by an imaging system for particle detection;
FIG. 4 depicts the ROI identification, registration and combination for use in particle detection;
FIG. 5 depicts a method of particle detection;
FIG. 6 depicts a further particle inspection system;
FIG. 7 depicts a rotary dial with linear movement that may be used in a particle inspection system; and
FIG. 8 depicts a rotary dial with non-linear movement that may be used in a particle inspection system.

### DETAILED DESCRIPTION

Inspection of liquids for particles is important in various fields, including in the pharmaceutical field where containers such as vials and/or syringes may be filled with a liquid that needs to be substantially free of contaminants. While there are various existing techniques for performing the particle inspection, the automated inspection system described herein uses a camera system with a stationary field of view that the containers pass through along a linear path. A telecentric lens may be used to ensure that there is no distortion at different locations in the field of view. Additionally, the use of the telecentric lens may provide greater flexibility in the path of the container through the field of view of the imaging system. The use of the stationary field of view imaging system simplifies the overall system design while still providing a high speed, and so high throughput, inspection system. The ability to perform particle inspection without requiring moving optics or moving cameras, while still being able to inspect every part with the camera, increases the simplicity of the solution.

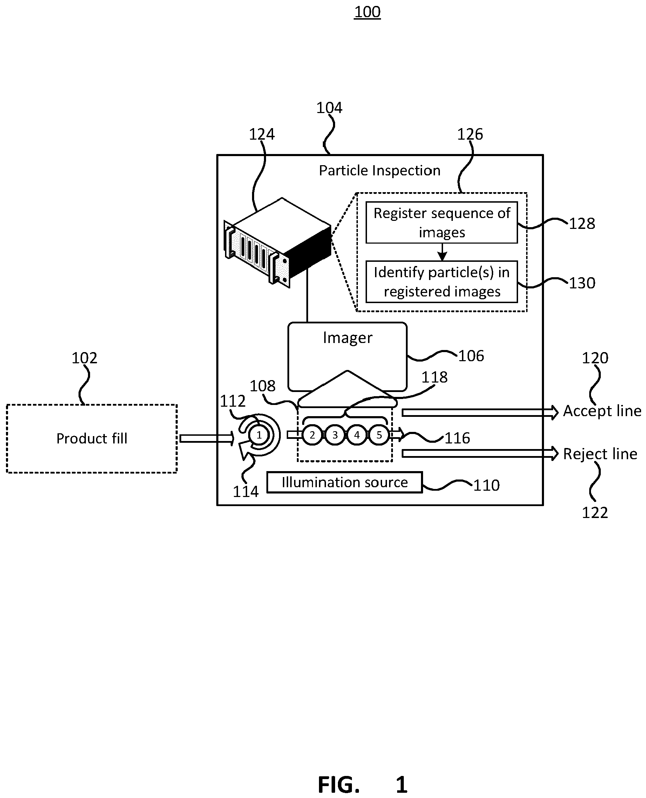

FIG. 1 depicts a particle inspection system. Broadly, the inspection system detects particles within a container of liquid by rotating the container to cause the liquid, and any suspended particles to rotate. The rotation of the container is then stopped and images captured as the liquid, and any suspended particles, continue to rotate within the container. The moving particles can easily be identified in the sequence of images.

The system 100 may include a product or part filling station 102 in which containers are filled, and possibly sealed. It will be appreciated that the particulars of the filling station 102 may vary substantially depending upon the product being filled as well as the containers, however the design of such systems is well known. Once filled, the parts, which may be containers such as vials, syringes, ampules or cartridges, are passed to a particle inspection station or cell 104. The particle inspection may be only one step or stage of the product inspection. For example, other inspections may be performed to verify that the product is properly sealed.

The inspection station 104 includes an imaging system 106 that is stationary and has a stationary field of view 108. Although not depicted in FIG. 1, the imaging system 106 may be a single camera that uses a telecentric lens so that there is no distortion across the field of view. An illumination source 110 is provided in order to provide sufficient light for the imaging device. The illumination source 110 may be larger than the field of view 108 so that the illumination will be approximately the same across the entire field of view, and not experience significant edge effects. The brightness of the illumination source may depend upon various factors, including the imaging system used, the speed of the imaging system, the speed of the container transport, the transparency of the container, and the transparency of the liquid. The illumination source 110 may be arranged as a backlight, that is on the side of the container opposite the imagine system, or as a front light, that is on the same side of the container as the imaging system. While a backlight may be preferred in certain situations, it may not be possible in all applications. For example a container may include an opaque portion within the container, such as a plunger of a syringe that makes a backlight undesirable given a portion of the liquid would be in the shadow of the plunger.

Although not depicted in detail in FIG. 1, the containers are carried by a transport system. Each container may be individually held by a gripper or holder that is capable of holding the container as it is moved along the transport system. The transport system may be a dial type transport system which uses a large rotating dial to move containers through the particle inspection cell. The containers may be handed off between a plurality of different dials or transport systems as the containers pass through the manufacturing process. The transport system may additionally or alternatively use a track or conveyer type system. Regardless of the type of transport system used, each container is able to be held on the transport system and rotated at relatively high speed and the rotation stopped.

A container 112 is depicted as it passes through the particle inspection system, depicted as numbered positions 1, 2, 3, 4, 5, 6. The container is first rotated as depicted by arrow 114. The rotation is done for a sufficient period of time to cause the fluid, and any suspended particles, to rotate with the container. The rotation may occur at the same time that container is moved in a linear or circular path.

Once the rotation is stopped, the container is moved through the imagers field of view 108 in a linear path depicted by arrow 116. The container may move on a linear section of track or conveyer through the field of view. Alternatively, if the container moves on a rotation dial, the container may be held by a linear motion component that counters the circular motion of the dial in order to cause the container to move along a linear path through the field of view.

As the container passes through the field of view 108, depicted as positions 2, 3, 4, 5, a plurality of images are captured by the stationary field of view imager. The liquid in the container remains in rotation as the images are captured. As the liquid rotates, and suspended particles will also rotate and will be in different positions within the container in the sequence of images. In contrast to the moving particles, any markings or features on the container will not be moved in the sequence of images. Depending upon whether or not particles are detected within the container, the containers may be moved to an acceptance line 120 in which the containers continue through the manufacturing/assembly line, or may pass to a rejection line 122 in which the containers are discarded, or reused.

The imager may be coupled to a processing device 124 which may be configured to execute code to provide various functionality 126, including image processing functionality. The image processing functionality registers the container captured in the sequence of images to each other (128) so that the images of the containers are effectively 'overlaid' with each other. With the containers in the captured series of images registered, or aligned, particle identification functionality (130) can identify one or more particles within the container based on the registered images.

It will be appreciated that while a single container is depicted in FIG. 1, the system 100 processes containers in high speed such as hundreds, possibly above 800, of parts per minute. It will be appreciated that the throughput of the system may be increased by adding additional imagers and transport paths, along with the necessary computing resources.

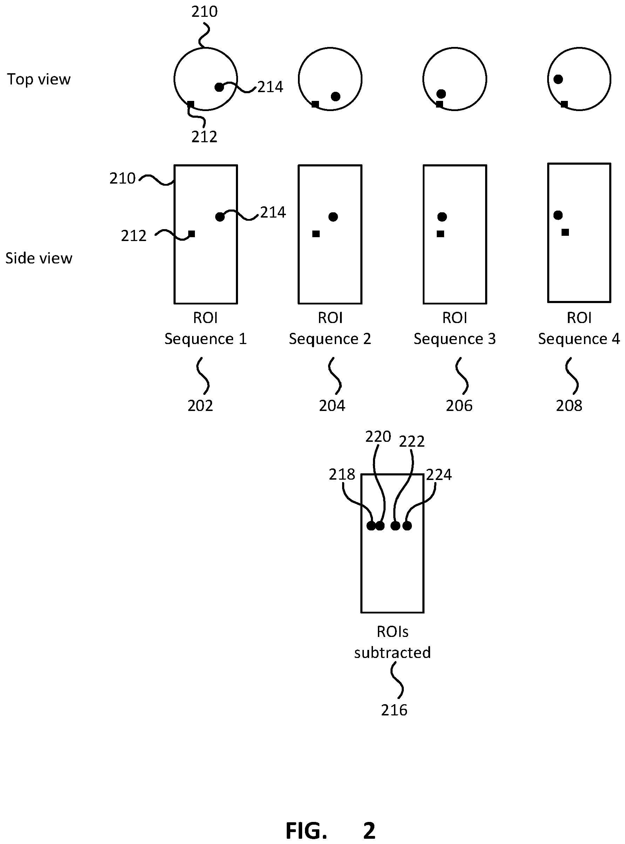

FIG. 2 depicts a schematic of the image processing technique for particle detection. The technique used to detect particles that are within the container and differentiate them versus marks on the outside of the container is based on comparing a sequence of images to each other. The basic operation for this comparison may be image subtraction. A simplified example is shown in FIG. 2, which shows a representation of different images 202, 204, 206, 208 of a container 210 along with corresponding top views. The container has dirt, mark, particle, etc. on an exterior surface of the container depicted as square 212 and a particle in the interior of the container, depicted as circle 214. As can be seen in the sequence of images and corresponding top views, the particle 214 that is inside the container is moving with the liquid, whereas the dirt 212 that is on the outside does not move between the images, and is therefore not observed in the composite image 216 as they are effectively cancelled out. The composite image 216 may be generated by subtracting all of the registered images. The moving features, such as the particles suspended within the liquid remain in the composite image, depicted as circles 218, 220, 222, 224. With the composite image, any particles within the container may be identified.

To perform this inspection, there must be a stationary frame of reference between the container and the camera. In order to provide this stationary frame of reference, the camera system uses image registration with multiple images from a single camera, or possibly image registration with multiple images from multiple cameras. With both techniques, one of the challenges is to ensure the view of the container in the multiple images, whether captured by a single camera or multiple cameras is identical, or substantially similar, to assist with the image subtraction. A difference between the methods is that with a single camera system it is easier to control the intensities of the plurality of images since they are captured using the same camera and light source. Additionally, a single camera system may benefit from using fewer cameras and less hardware.

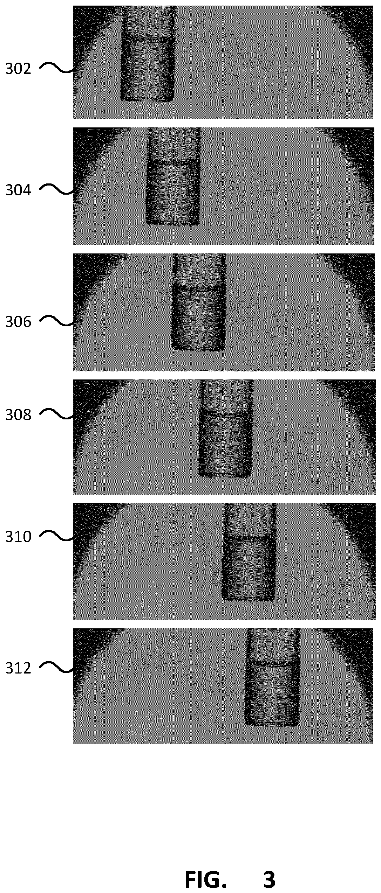

FIG. 3 depicts illustrative images captured by an imaging system for particle detection. Each of the images 302, 304, 306, 308, 310, 312 are captured from the same camera system with a fixed field of view. As depicted, a vial is captured as it traverses across the field of view captured by the camera. The vial moves from the left to the right as depicted in the images. The sequence of images 302 .. 312 are captured from a camera with a telecentric lens so that the captured images of the vial are not distorted even as the vial moves through the field of view. As described further below, the images depicted in FIG. 3 may be processed in order to register, or align, the images, or portions of the images, so that the vial in each image overlaps with the vials in the other images.

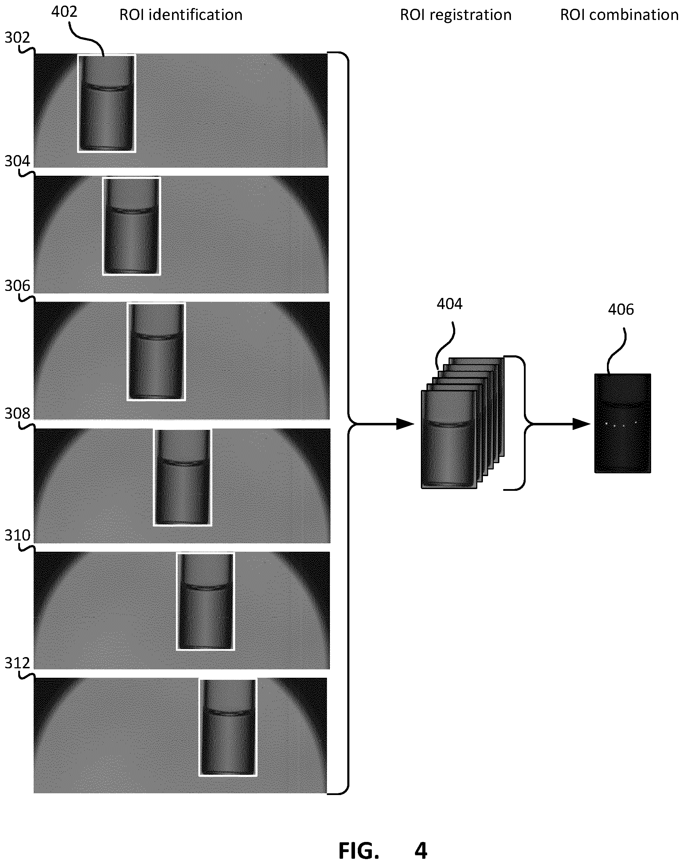

FIG. 4 depicts the ROI identification, registration and combination for use in particle detection. Each of the images 302..312 can be processed in order to identify a region of interest (ROI) 402 depicted for image 302. Since the images are captured from a camera system using a telecentric lens, and since the vial moves through the field of view of the telecentric lens in a linear motion, the outline of the vial is substantially the same in each of the images. Once the ROI of the vial is identified in each of the images, the ROIs can be aligned with each other. The individual images may be cropped to the ROIs and the cropped images aligned as depicted by ROI group 404.

In order to align the vials, whether with the entire images or the cropped ROIs, the images may be processed in order to identify features within the ROls. The common features in each of the ROIs may be identified and matched to each other in order to determine a transformation necessary in order to align, or overlap, the positions of the common features across the images, or portions of the images.

Once the ROIs are aligned 404, the images, or ROI portion of the images, may be combined to generate a composite image 406. The composite image 406 may be generated in various ways but combines the images in a manner that facilitates the detection of particles in the vial from the combined image. For example, the combined image may be generated by subtracting each of the registered images/ROIs. Once combined together, the combined image can be processed to identify the particles within the combined images. As depicted in the combined image 406, by subtracting all of the images, substantially all of the combined image is black, except for the moving particles. The combined image allows the presence of particles within the vial to be easily identify. The particles may be identified using feature detection and the features may be determined as being a particle feature based on one or more of an intensity of the feature, a size of the feature, a shape of the feature.

Although described as determining the particle features, and so the presence of a particle in the vial, based on the combined image 406, it is possible to determine the particle features based on the aligned images. For example, each of the registered images may be processed in order to identify a plurality of features, which may include both particle features and non-particles features. The features of each of the images can be combined together in order to remove common features across each of the images, leaving only those features that are not common across the images, which may be assumed to be moving particles.

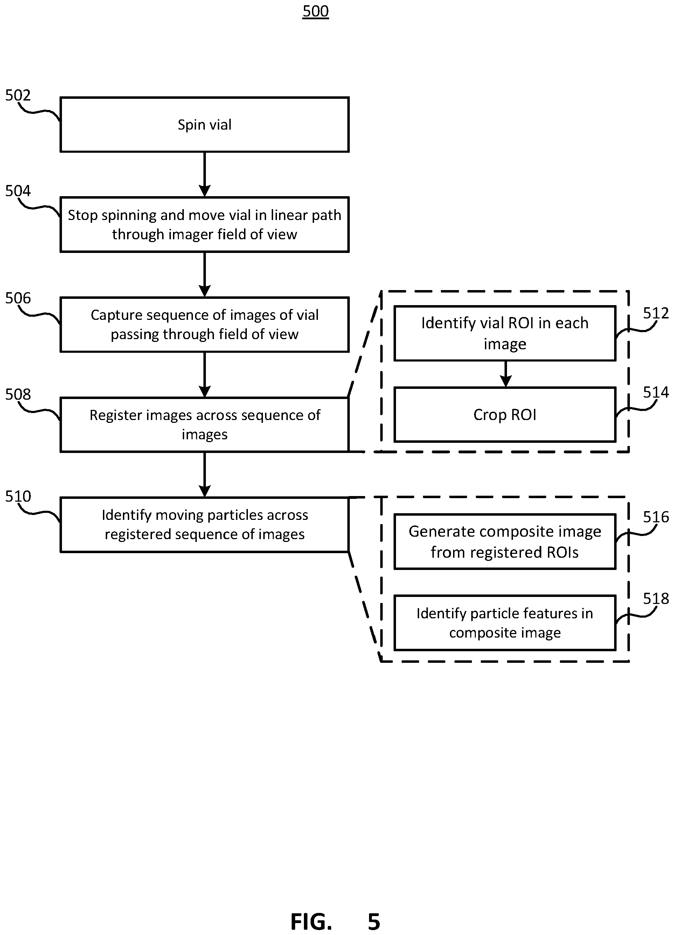

FIG. 5 depicts a method of particle detection. The method 500 begins with spinning a vial, or other liquid container (502). The vial may be held by a gripper or other device that is able to rotate the vial at a desired RPM, such as 1800 RPM, although the spin rate may be higher or lower depending upon the details of the containers and the liquid. In addition to spinning the vial, the gripper may also controllably release the vial, for example to possibly transfer the vial to another gripper within the assembly line. Further the gripper moves along a transport system that moves the gripper, and so the vial, through the assembly line, including through the inspection system. The transport system may comprise a track, rail or conveyor type system or a rotary dial type of transport system.

Once the vial has been spun for a sufficient period of time for the liquid to rotate with the vial, which may also agitate a potential particle into the liquid, the spinning of the vial is stopped and the vial moved through the field of view of the imager (504). The vial moves through the field of view along a linear path. For a rotary dial style of transport system, which would otherwise have an arcuate path of the dial, the vials, or the grippers of the vials on the rotary dial may be connected via a cam or other element that causes the vial to travel along a linear path within the field of view despite the radial movement of the dial.

As the vial passes through the camera's field of view, a sequence of images of the vial is captured (506). The captured images are registered against each other (508) so that the vial in each image overlys with the other vials. Once registered against each other, any moving particles within the vial are identified using the registered images (510). The identification of particles within the vial may be used to control movement of the vial through the assembly line. For example, if particles are detected, the vial may be passed to rejection line whereas if the particles are not detected, the vial can pass to an acceptance line and continue through the remainder of the assembly line.

The sequence of images may be registered to each other in various different ways. For example, the processing may locate the container ROI in each image (512) and copies the desired region of interest into a new processing buffer, or otherwise crops the identified ROI (514). The identification of the vial as the ROI in each image and cropping to the ROI effectively aligns each cropped portion, each ROI for the container is then "registered" to each other. Alternatively, the registration may be performed by identifying the vial ROls, and then identifying features within the ROIs and using common features across images in order to align each of the ROIs/images to each other.

The identification of moving particles within the vial using the registered images may be done in various different ways. For example, a composite image may be generated from the registered images/ROIs (516). The composite image may be generated in various ways including for example by subtracting each of the images on a pixel-by-pixel basis. Once the composite image is generated it is processed to identify any particles within the composite image (518). The composite image may be further processed, such as by filtering, smoothing, sharpening, etc. in order to facilitate the identification of the particle features.

The image processing described above, including possibly image registration and particle identification may be performed using various image processing techniques. The techniques may include for example one or more machine-learning (ML) algorithms. The ML algorithms may be any suitable artificial intelligence (Al) models that are trained to make predictions, such as the location of ROIs in captured images and/or locations of particles, and/or the presence of particles. Various types of training methods may be used to generate the models, such as support vector machines, linear regression, logistic regression, naive Bayes, linear discriminant analysis, decision trees, k-nearest neighbor algorithms, neural networks, similarity learning, polynomials with ridge estimators, polynomial with linear estimators, and the like. It will be appreciated that other ML algorithms may be used in the image processing.

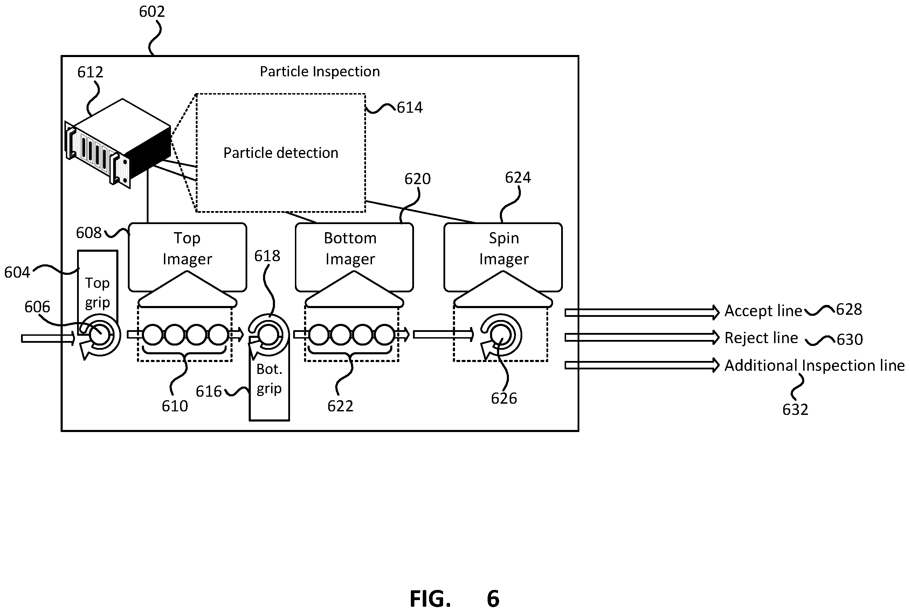

FIG. 6 depicts a further particle inspection system. The particle inspection system 600 is similar to that depicted in FIG. 1. However, the inspection system 600 includes a plurality of different imagers. When a vial enters the inspection system 604 it is held by a gripper or similar device depicted as a top grip 604. The gripper spins 606 the vial and then stops the spinning and passes the vial through a field of view of a first image 608 in a linear motion. The imager 608 captures a series of images with the vial in different locations 610 in the field of view. The images may be processed by a processor 612 that provides particle detection functionality 614 in order to detect any particles within the vial. The gripper 604 holds the vial at some position on the vial and may obscure at least a portion of the vial. Accordingly, the particle inspection system may include an additional gripper, depicted as a bottom grip 616 that hold the vial at a different location and so obstructs a different portion of the vial and so allows the previously obstructed portion to be imaged for particles. Although depicted as a separate gripper, the same gripper may be used by repositioning the location the vial is held at. The vial is again spun (618) and stopped and passed through the field of view of the second imager 620 in order to capture a series of images 622 while the liquid is still rotating within the vial. The images are again processed by the particle detection functionality 614 to identify any particles. Although depicted as a separate imager, it is possible to pass the vial through the first imager 608 after changing the grip position on the vial.

The above has described detecting particles that are suspended within a liquid in the vial. The technique relies upon the movement of the particle relative to the stationary vial to detect the particle. A similar process may be used in order to detect particles that are stuck to an interior surface of the vial. However, in order to detect such particles, the vial is imaged 624 while the still spinning 626. The images are processed in order to identify various features, which may include features both on the interior surface and exterior surface. Movement of corresponding features across the sequence of images is evaluated in order to determine if the motion of the particle corresponds to motion consistent with being on an interior or exterior surface of the vial.

Depending upon whether or not particles are detected in the vial, the vial may pass to an acceptance line 628 or a rejection line 630. It is possible for an additional line 632 to be provided for vials that require further inspection. For example, particles may be detected in a region of the vial that may be unreliable for the particle inspection. For example, around a meniscus of the liquid, it may be difficult to properly detect particles as the meniscus which may still be moving as a result of the spinning/stopping motion, and may be incorrectly identified as a particle. Accordingly, when a particle is detected, it may be determined if it is in a masked area or area otherwise identified as requiring further examination and if the particle is in the masked area further imaging and detection may be performed.

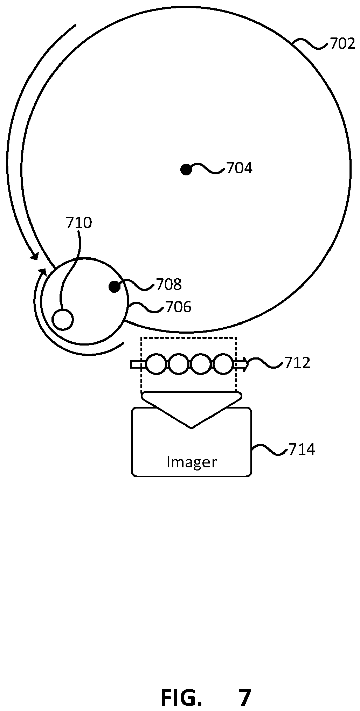

FIG. 7 depicts a rotary dial with linear movement that may be used in a particle inspection system. The particle detection system described above uses a fixed field of view imager that captures a series of images of a vial as it moves through the field of view along a linear path. Accordingly, the transport system needs to be able to move the vial in a linear path, at least while passing through the field of view. While this linear motion may be simple to achieve with a conveyor or rail type of transport system, it may be more difficult to achieve with a radial dial type of transport system.

As depicted in FIG. 7, a radial dial transport system may provide a vial with linear motion through a field of view of an imager. The dial transport system comprises a main dial 702 that rotates about its center 704. Around the perimeter of the main dial 702 are mounted a plurality of vial holders. Only one vial holder is depicted in FIG. 7 for simplicity. The vial holder may be provided as a cam device such as a rotating cam or disc 706 that pivots about an off-center axis 708. The cam or disc may be controllably rotated for example by a motor or servo or possibly a mechanical linkage. The vial 710 is held on the cam or disc 706 and as the vial passes through the field of view, the cam is moved in order to counter the radial motion of the main dial 702. The cam motion in combination with the main dial motion cause the vial 710 to move in a linear path depicted by arrow 712 while passing through the field of view of the imager 714. It will be appreciated that other methods of providing linear movement with a dial style transport system are possible.

The above has described techniques for detecting particles or contaminants within a container. The techniques described above have been described as relying on a linear path of the container through the field of view of the camera or imaging system in order present the container to the camera in the same orientation while it is imaged at different locations in the field of view. It will be appreciated that the linear motion is not required when a telecentric lens is used. Rather if a telecentric lens is used, as long as the container is oriented with the same face pointing to the camera throughout its movement through the field of view, the same image processing for the particle detection may be used even with non-linear motion of the container through the field of view.

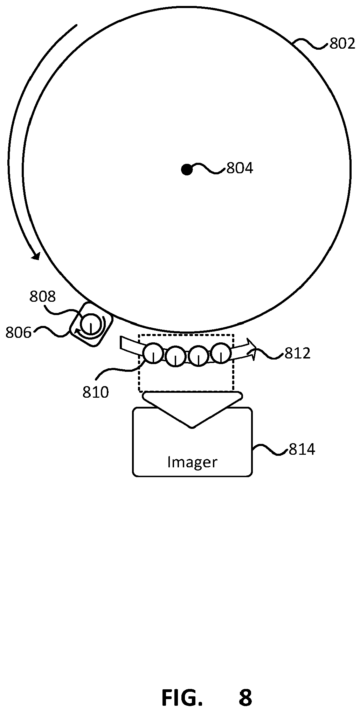

FIG. 8 depicts a rotary dial with non-linear movement that may be used in a particle inspection system. Although described with reference to a rotary dial style of movement other techniques for moving the container in a non-linear motion may be used. The dial transport system comprises a main dial 802 that rotates about its center 804. Around the perimeter of the main dial 802 are mounted a plurality of container holders. Only one container holder 806 is depicted in FIG. 8 for simplicity. The holder 806 can hold a container and rotate the container 808 so that a face of the container is maintained in the same orientation. The holder allows the container to be controllably rotated for example by a motor or servo or possibly a mechanical linkage. The container 808 is held on the holder 806 and as the vial passes through the field of view, the container is moved in order to counter the radial motion of the main dial 802 so that the face of the container maintains the same orientation throughout the movement as depicted by containers 810. Although the container does not travel in a linear path depicted by arrow 812 while passing through the field of view of the imager 814, the containers face is maintained in the same orientation relative to the imager 814 which uses a telecentric lens.

While the non-linear motion is depicted in FIG. 8 as being provided by a dial, the non-linear motion may be provided by any transport system that is able to carry the container through the field of view in a non-linear path while maintaining the orientation of the container fixed relative to the imaging system.

The various components described above may be implemented by configuring a computer or server and/or on application specific integrated circuits (ASICs) and/or field programmable gate arrays (FPGAs) or other combinations of hardware, firmware and software.

As is readily apparent, numerous modifications and changes may readily occur to those skilled in the art, and hence it is not desired to limit the invention to the exact construction and operation shown and described, and accordingly all suitable modification equivalents may be resorted to falling within the scope of the invention as claimed.

## Claims

1. A particle inspection method for detecting particles within a liquid, the method comprising:
rotating a container being inspected for a time sufficient to cause the liquid within the container to rotate;
stopping rotation of the container;
while the liquid remains rotating within the container, moving the container through a field of view of a stationary imaging system;
capturing a plurality of images from the stationary imaging system as the container moves past the imaging system;
registering the plurality of images to each other;
combining the registered plurality of images;
detecting one or more particles in the combined registered plurality of images; and
failing the particle inspection for the container when one or more particles are detected in the combined registered plurality of images.

2. The method of claim 1, wherein the plurality of images each capture an image of the container at a different location within a field of view of the imaging system.

3. The method of claim 1, wherein the plurality of images each capture an image of a plurality of containers, including the container, at different locations within a field of view of the imaging system.

4. The method of any one of claims 1 to 3, wherein the imaging system comprises a telecentric lens.

5. The method of any one of claims 1 to 4, wherein the container moves through the field of view of the stationary imaging system in a linear path.

6. The method of any one of claims 1 to 5, wherein the container moves through the field of view in a fixed orientation relative to the imaging system.

7. The method of any one of claims 1 to 6, wherein registering the plurality of images to each other is based on the container and comprises:
identifying in each of the plurality of images a region of interest (ROI) based on the container;
identifying common features within the ROIs in each of the plurality of images; and
registering each of the images to each other based on positions of common features within the ROls.

8. The method of any one of claims 1 to 7, wherein combining the registered plurality of images comprises subtracting the images pixel-by-pixel, or adding the images pixel-by-pixel.

9. The method of any one of claims 1 to 8, wherein detecting one or more particles comprises detecting particle features based on one or more of:
feature intensity levels in the images;
feature shape; and
feature size.

10. The method of any one of claims 1 to 9, further comprising:
capturing one or more additional images of a masked region for further image processing;
determining if there is at least one additional particle in the one or more additional images; and
failing the container inspection when there are at least one additional particle.

11. The method of any one of claims 1 to 10, wherein the container is held at a first position when rotating the container; the method further comprising:
adjusting a holding position of the container;
rotating the container;
stopping rotation of the container;
while the liquid remains rotating within the container, moving the container along a second linear path through a second stationary imaging system;
capturing a second plurality of images from the second stationary imaging system as the container moves past the second imaging system;
registering the second plurality of images to each other;
combining the registered second plurality of images;
detecting one or more second particles in the combined registered second plurality of images; and
failing the particle inspection for the container when one or more second particles are detected.

12. The method of any one of claims 1 to 11, further comprising:
rotating the container;
capturing a further plurality of images as the container moves while spinning;
registering the further plurality of images to each other;
combining the registered further plurality of images;
detecting one or more further particles located on an inside surface of the container in the combined registered further plurality of images; and
failing the particle inspection for the container when one or more further particles are detected.

13. The method of any one of claims 1 to 12, wherein the container comprises one or more of vials and syringes.

14. A particle inspection system for detecting particles within a liquid, the system comprising:
a container movement assembly for rotating a container and moving the container through an inspection line;
an imaging system in a fixed position along the inspection line; and
a processing device capable of performing a method according to any one of claims 1 to 13.

15. The system of claim 14, wherein one or more of:
the imaging system comprises a telecentric lens;
the container movement assembly comprises a rotary dial based assembly or a track based assembly, with a rotation mechanism arranged in each container holder;
the imaging system comprises light control film to control light distribution.
